# EUROPEAN PATENT APPLICATION

(11) **EP 3 805 836 A1**
(43) Date of publication of application: **14.04.2021**
(21) Application number: 19807421.3
(22) Date of filing: 05.04.2019
(51) Int. Cl.: G02B 21/00, G06T 7/00

(54) **CONTROL DEVICE, CONTROL METHOD, AND PROGRAM**

(30) Priority: 25.05.2018 JP 2018100359
(71) Applicant: Sony Corporation, 108-0075 Tokyo (JP)
(72) Inventor: OHASHI, Takeshi, Tokyo 108-0075 (JP); SHINODA, Masataka, Tokyo 140-0002 (JP)
(74) Representative: D Young & Co LLP
(86) International application number: PCT/JP2019/015203
(87) International publication number: WO 2019/225177

(57) **Abstract**

In capturing an image of an observation target in a time series, the image of the observation target is captured with a high degree of accuracy.

Provided is a control device including an image capturing control unit that controls image capturing of an observation target including a cell having division potential in a time series. The image capturing control unit controls at least one of a relative horizontal position or a relative focal position between an image capturing unit that performs the image capturing and the observation target on the basis of a recognition result of the observation target calculated with use of a pre-trained model generated on the basis of a machine learning algorithm.

## Description

### TECHNICAL FIELD

The present disclosure relates to a control device, a control method, and a program.

### BACKGROUND ART

In recent years, a method has widely been used in which an image of a cell or the like is captured in a time series to observe temporal change of the cell. For example, Patent Document 1 discloses a technique for evaluating a cell, such as a fertile ovum, serving as an observation target in a time series with a high degree of accuracy.

### CITATION LIST

### PATENT DOCUMENT

Patent Document 1: Japanese Patent Application Laid-Open No. 2018-22216

### SUMMARY OF THE INVENTION

### PROBLEMS TO BE SOLVED BY THE INVENTION

Here, for example, to evaluate an observation target as described in Patent Document 1, it is required to capture an image of the observation target with a high degree of accuracy. However, in a case where images of a large number of observation targets are captured over a long period of time, it is difficult to manually adjust, for example, a horizontal position and a focal position of each observation target each time.

Under such circumstances, the present disclosure proposes a novel and improved control device, control method, and program enabling, in capturing an image of an observation target in a time series, the image of the observation target to be captured with a high degree of accuracy.

### SOLUTIONS TO PROBLEMS

According to the present disclosure, provided is a control device including an image capturing control unit that controls image capturing of an observation target including a cell having division potential in a time series. The image capturing control unit controls at least one of a relative horizontal position or a relative focal position between an image capturing unit that performs the image capturing and the observation target on the basis of a recognition result of the observation target calculated with use of a pre-trained model generated on the basis of a machine learning algorithm.

Also, according to the present disclosure, provided is a control method including a processor's control of image capturing of an observation target including a cell having division potential in a time series. The control of image capturing further includes control of at least one of a relative horizontal position or a relative focal position between an image capturing unit that performs the image capturing and the observation target on the basis of a recognition probability of the observation target calculated with use of a pre-trained model generated on the basis of a machine learning algorithm.

Further, according to the present disclosure, provided is a program causing a computer to function as a control device. The control device includes an image capturing control unit that controls image capturing of an observation target including a cell having division potential in a time series. The image capturing control unit controls at least one of a relative horizontal position or a relative focal position between an image capturing unit that performs the image capturing and the observation target on the basis of a recognition probability of the observation target calculated with use of a pre-trained model generated on the basis of a machine learning algorithm.

### EFFECTS OF THE INVENTION

As described above, according to the present disclosure, in capturing an image of an observation target in a time series, the image of the observation target can be captured with a high degree of accuracy.

Note that the above effects are not necessarily limitative and that, in addition to or instead of the above effects, any of the effects described in the present description or other effects comprehensible from the present description may be exerted.

### BRIEF DESCRIPTION OF DRAWINGS

Fig. 1 is a flowchart illustrating a flow of image capturing control by means of a control device according to an embodiment of the present disclosure.
Fig. 2 is a block diagram illustrating functional configuration examples of an image capturing device and the control device according to the embodiment.
Fig. 3 is a diagram illustrating a physical configuration example of the image capturing device according to the embodiment.
Fig. 4 is a diagram for describing image capturing control based on a center-of-gravity position of an observation target according to the embodiment.
Fig. 5 is a diagram illustrating an example of a recognition probability image according to the embodiment.
Fig. 6 is a diagram for describing detection of the center-of-gravity position of the observation target according to the embodiment.
Fig. 7 is a diagram for describing calculation of an enlargement magnification according to the embodiment.
Fig. 8 is an example of an image captured on the basis of the center-of-gravity position and the enlargement magnification according to the embodiment.
Fig. 9 is a diagram for describing image capturing control based on the center-of-gravity position in a case where the observation target is a structure contained in a cell according to the embodiment.
Fig. 10 is an example of a recognition probability image in a case where a cell mass in a fertile ovum is set as the observation target according to the embodiment.
Fig. 11 is a diagram for describing detection of the center-of-gravity position of the observation target and calculation of the enlargement magnification according to the embodiment.
Fig. 12 is an example of an image captured on the basis of the center-of-gravity position and the enlargement magnification according to the embodiment.
Fig. 13 is comparison of images sequentially captured by the image capturing control according to the embodiment.
Fig. 14 is comparison of images sequentially captured by the image capturing control according to the embodiment.
Fig. 15 is a flowchart illustrating a flow of the image capturing control based on the center-of-gravity position of the observation target according to the embodiment.
Fig. 16 is a diagram for describing control of a focal position according to the embodiment.
Fig. 17 is a flowchart illustrating a flow of specifying a focal length appropriate to image capturing of the observation target according to the present embodiment.
Fig. 18 is a diagram for describing a difference image generated at a pixel level according to the embodiment.
Fig. 19 is a diagram for describing background removal based on a difference feature amount according to the embodiment.
Fig. 20 is a flowchart illustrating a flow of the background removal based on the difference feature amount according to the embodiment.
Fig. 21 is a diagram illustrating a hardware configuration example according to an embodiment of the present disclosure.

### MODE FOR CARRYING OUT THE INVENTION

Hereinafter, a preferred embodiment of the present disclosure will be described in detail with reference to the accompanying drawings. Note that, in the present description and drawings, components having substantially the same function and configuration are labeled with the same reference signs, and duplicate description is omitted.

Note that description will be provided in the following order.
1. Embodiment
   1.1. Overview
   1.2. Configuration Example
   1.3. Details of Control
2. Hardware Configuration Example
3. Wrap-up

### <1. Embodiment>

### <<1.1. Overview>>

First, an overview of an embodiment of the present disclosure will be described. As described above, in recent years, in various fields, a method has widely been used in which an image of an observation target such as a cell is captured in a time series (also referred to as time lapse image capturing) to observe temporal change of the cell.

For example, in a livestock field, a method has been used in which, when a fertile ovum of a farm animal or the like is grown to a state where the fertile ovum can be transplanted, the time lapse image capturing is performed to observe temporal change of the fertile ovum and evaluate a growth state.

Here, to evaluate the above-described growth state, it is required to capture an image of the fertile ovum in a time series with a high degree of accuracy. To this end, in general, a person performs operations and the like of visually observing the fertile ovum with use of an image capturing device such as a microscope, adjusting a horizontal position (x direction and y direction) and a focal position (z direction) of a stage, and selecting an optical magnification lens.

However, in the above-described time lapse image capturing, there is a case where a large amount of fertile ova, such as 1000 to 2000 fertile ova, are observed at the same time, and a high workload and a long period of time are required to do the above-described adjustment manually for all of the fertile ova. Also, not only in the livestock field but also in fields of infertility treatment, regenerative treatment, and the like, the long-period time lapse image capturing has been performed, but it has been very difficult to perform 24-hour, unattended, and automatic image capturing of an observation target such as a fertile ovum.

A technical idea according to the present disclosure has been conceived in view of the above points and enables, in capturing an image of an observation target in a time series, the image of the observation target to be captured with a high degree of accuracy. To this end, a control device 20 that achieves a control method according to an embodiment of the present disclosure has a characteristic of controlling image capturing of an observation target on the basis of a recognition probability of the observation target calculated with use of a pre-trained model generated on the basis of a machine learning algorithm.

For example, the control device 20 according to an embodiment of the present disclosure may have a function of analyzing an image captured by an image capturing device 10 with use of the above-described pre-trained model and obtaining a probability distribution of a recognition probability of the observation target in the image to detect a center-of-gravity position of the observation target. The control device 20 according to the present embodiment can control the image capturing device 10 in order for the center-of-gravity position of the observation target detected as described above to be substantially at a center of an image capturing range for the image capturing device 10 and can cause the image capturing device 10 to capture an image of the observation target.

Also, for example, the control device 20 according to the present embodiment may analyze a plurality of images captured by the image capturing device 10 at different focal positions with use of the above-described pre-trained model and obtain a form probability of the observation target in each of the images to specify a focal position appropriate to image capturing of the observation target. For example, the control device 20 according to the present embodiment can cause the image capturing device 10 to capture an image of the observation target at a focal position for an image determined to have a highest form probability of the observation target.

Thus, with the control device 20 according to the present embodiment, in image capturing of the observation target, the center-of-gravity position and the focal position of the observation target can automatically be adjusted, manual operating cost can significantly be reduced, and images of a large number of observation targets can be captured over a long period of time with a high degree of accuracy.

Also, the control device 20 according to the present embodiment may have a function of removing a background from a captured image of the observation target with use of the pre-trained model generated on the basis of the machine learning algorithm. For example, the control device 20 according to the present embodiment can achieve the background removal on the basis of a difference feature amount, which is a difference between a feature amount extracted from an image of a well containing the observation target and a feature amount extracted from an image of an empty well not containing the observation target.

With the above-described function of the control device 20 according to the present embodiment, it is possible to effectively exclude an influence of the well from the captured image and, for example, to recognize and evaluate the observation target with a high degree of accuracy.

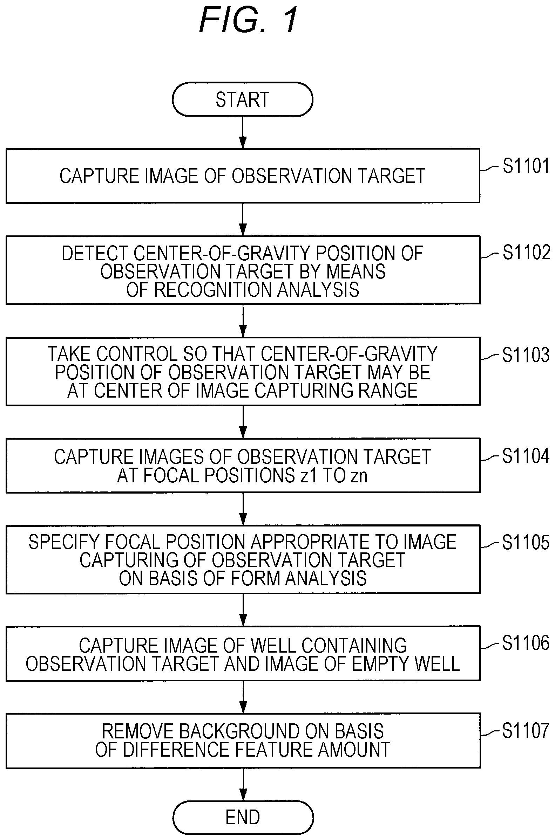

Here, an overview will be provided of a sequence of steps for image capturing control by means of the control device 20 according to the present embodiment. Fig. 1 is a flowchart illustrating a flow of image capturing control by means of the control device 20 according to the present embodiment.

Referring to Fig. 1, the control device 20 first controls the image capturing device 10 to cause the image capturing device 10 to capture an image of an observation target (S1101).

Subsequently, the control device 20 detects a center-of-gravity position of the observation target in the image captured in step S1101 by means of a recognition analysis with use of a pre-trained model generated on the basis of a machine learning algorithm (S1102).

Subsequently, the control device 20 takes control on the basis of the center-of-gravity position of the observation target detected in step S1102 so that the center-of-gravity position may be substantially at a center of an image capturing range for the image capturing device 10 (S1103).

Subsequently, the control device 20 causes the image capturing device 10 to capture images of the observation target at different focal positions z1 to zn (S1104).

Subsequently, the control device 20 sets the plurality of images captured in step S1104 as inputs and performs a form analysis with use of the pre-trained model generated on the basis of the machine learning algorithm to specify a focal position appropriate to image capturing of the observation target (S1105).

Subsequently, the control device 20 causes the image capturing device 10 to capture an image of a well containing the observation target and an image of an empty well not containing the observation target (S1106).

Subsequently, the control device 20 removes a background from the image of the well containing the observation target on the basis of a difference feature amount between the two images captured in step S1106 (S1107).

The flow of the image capturing control by means of the control device 20 according to the present embodiment has been described above. With the above-described function of the control device 20 according to the present embodiment, by automating long-period time lapse image capturing of a large number of observation targets and acquiring highly accurate images, highly accurate and efficient recognition and evaluation of the observation targets can be achieved.

Note that the observation target according to the present embodiment may be any of various cells having division potential such as a fertile ovum, for example. The cell having division potential changes in size and shape (including an internal shape) with growth and thus has a characteristic of making it difficult to continue image capturing at the same horizontal position and focal position. On the other hand, with the above-described image capturing control by means of the control device 20 according to the present embodiment, an image capturing environment can automatically be adjusted in accordance with temporal change of the cell having division potential, and a highly accurate image can be acquired. Note that examples of another cell having division potential include, for example, a cancer cell and any of various cultured cells such as an ES cell and an iPS cell used in a field of regenerative medicine or the like.

Further, in the present description, the "fertile ovum" at least conceptually includes a single cell and an aggregation of a plurality of cells.

Here, the single cell or the aggregation of a plurality of cells is related to a cell or cells observed at one or a plurality of stages in a process of growth of the fertile ovum including an oocyte, an egg or an ovum, a fertile ovum or a zygote, a blastocyst, and an embryo.

### <<1.2. Configuration Example>>

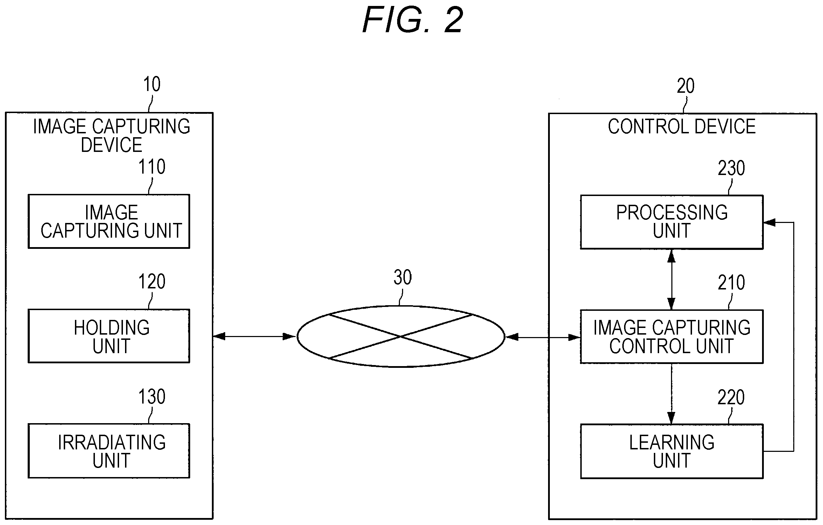

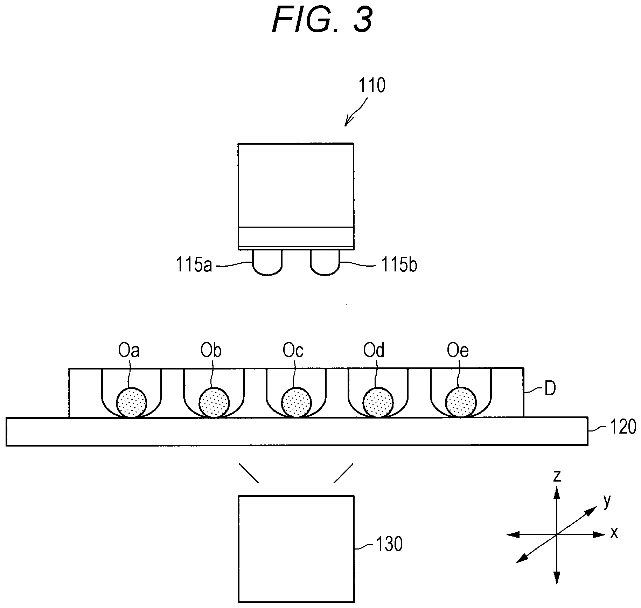

Next, configuration examples of the image capturing device 10 and the control device 20 according to the present embodiment will be described. Fig. 2 is a block diagram illustrating functional configuration examples of the image capturing device 10 and the control device 20 according to the present embodiment. Also, Fig. 3 is a diagram illustrating a physical configuration example of the image capturing device 10 according to the present embodiment.

Referring to Fig. 2, a control system according to the present embodiment includes the image capturing device 10 and the control device 20. The image capturing device 10 and the control device 20 may be connected via a network 30 to enable mutual communication.

### (Image Capturing Device 10)

The image capturing device 10 according to the present embodiment is a device that captures an image of an observation target such as a fertile ovum on the basis of control by means of the control device 20. The image capturing device 10 according to the present embodiment may be an optical microscope and the like having an image capturing function, for example.

Referring to Fig. 2, the image capturing device 10 according to the present embodiment includes an image capturing unit 110, a holding unit 120, and an irradiating unit 130.

### ((Image Capturing Unit 110))

The image capturing unit 110 according to the present embodiment has a function of capturing an image of an observation target on the basis of control by means of the control device 20. The image capturing unit 110 according to the present embodiment is achieved by an image capturing device such as a camera, for example. Also, the image capturing unit 110 may include a plurality of optical objective lenses 115 having different magnifications as illustrated in Fig. 3. In a case of the example illustrated in Fig. 3, the image capturing unit 110 includes an optical objective lens 115a having a low magnification and an optical objective lens 115b having a high magnification. The optical objective lenses 115 may be arranged in an objective lens exchange device controlled by the control device 20. Note that the number of the optical objective lenses 115 according to the present embodiment is not limited to that in the example illustrated in Fig. 3 but may be three or more or one. Also, the optical magnification may be changed by electronically increasing or decreasing the magnification value.

The control device 20 according to the present embodiment can control image capturing timing of the image capturing unit 110, image capturing time (exposure time), selection of the optical objective lenses 115, a physical position of the image capturing unit 110 in a horizontal direction or a vertical direction, and the like.

### ((Holding Unit 120))

The holding unit 120 according to the present embodiment has a function of holding a culture dish in which an observation target is cultured. The holding unit 120 according to the present embodiment can be an observation stage, for example. As illustrated in Fig. 3, a culture dish D for culturing a plurality of observation targets Oa to Oe is arranged on an upper surface of the holding unit 120 according to the present embodiment. Each of the observation targets O according to the present embodiment may be arranged in each of a plurality of wells provided in the culture dish.

The control device 20 according to the present embodiment can control a horizontal position or a focal position of an observation target in image capturing by controlling the physical position or the like of the holding unit 120 in the horizontal direction or the vertical direction.

### ((Irradiating Unit 130))

The irradiating unit 130 according to the present embodiment has a function of emitting various kinds of light for use in image capturing on the basis of control by means of the control device 20. Also, the irradiating unit 130 according to the present embodiment may widely include an optical system such as a diaphragm.

The control device 20 according to the present embodiment can control the type of a light source emitted by the irradiating unit 130, a wavelength of light, intensity, irradiation time, an irradiation interval, and the like.

### (Control Device 20)

The control device 20 according to the present embodiment has a function of controlling image capturing of an observation target on the basis of a recognition probability of the observation target calculated with use of a pre-trained model generated on the basis of a machine learning algorithm. The control device 20 according to the present embodiment may be implemented as an information processing server, for example, and may remotely control the image capturing device 10 via the above-described network 30. In a case where the control device 20 remotely controls the image capturing device 10, the control device 20 may generate conditions for image capturing performed by the image capturing unit 110 on the basis of a recognition probability of an observation target and transmit the conditions to the image capturing device 10 or may transmit from the control device 20 to the image capturing device 10 information for causing the image capturing device 10 to determine conditions for image capturing performed by the image capturing unit 110, the conditions being generated on the basis of a recognition probability of an observation target, for example.

### ((Image Capturing Control Unit 210))

An image capturing control unit 210 according to the present embodiment has a function of controlling time-series image capturing of an observation target by means of the image capturing device 10. The image capturing control unit 210 according to the present embodiment has a characteristic of controlling a relative horizontal position, focal position, and the like between the image capturing unit 110 and an observation target on the basis of a recognition probability of the observation target calculated with use of a pre-trained model generated on the basis of a machine learning algorithm. Note that the observation target according to the present embodiment may be any of various cells having division potential such as a fertile ovum as described above. Details of a function of the image capturing control unit 210 according to the present embodiment will separately be described later.

### ((Learning Unit 220))

The learning unit 220 according to the present embodiment has a function of performing learning related to, for example, recognition of an observation target on the basis of an image of the observation target captured and a machine learning algorithm. The learning unit 220 according to the present embodiment may perform recognition learning of the observation target by means of machine learning with use of a multilayer neural network such as deep learning including a plurality of convolution layers, for example.

The learning unit 220 according to the present embodiment can learn a feature related to a shape, a form, a structure, or the like of the observation target by performing supervised learning based on an image of the observation target captured and training data, for example. Note that the above-described training data may include classification of the observation target included in the image (for example, a fertile ovum and the like), a growth stage of the observation target (for example, two cells, four cells, morula, early blastocyst, blastocyst, expanded blastocyst, and the like), or information regarding a quality state of the observation target (for example, Gardner classification, veeck classification, and the like), for example. That is, the learning unit 220 may perform machine learning (for example, machine learning with use of a multilayer neural network) with use of learning data including the image of the observation target captured and the above-described training data (information regarding a feature related to at least one of the shape, the form, the structure, or the like of the observation target) to generate a pre-trained model for recognizing the observation target. That is, in a case of the machine learning with use of the multilayer neural network, for example, the above-described learning causes weighting factors (parameters) between respective layers of an input layer, an output layer, and a hidden layer forming the neural network to be adjusted to generate the pre-trained model.

### ((Processing Unit 230))

A processing unit 230 according to the present embodiment has a function of calculating a recognition probability or the like of the observation target on the basis of learning knowledge learned by the learning unit 220. That is, the processing unit 230 according to the present embodiment may be a recognizer (also referred to as a classifier) generated by learning performed by the learning unit 220. Details of a function of the processing unit 230 according to the present embodiment will separately be described later.

### (Network 30)

The network 30 has a function of connecting the image capturing device 10 to the control device 20. The network 30 may include a public line network such as the Internet, a telephone line network, and a satellite communication network, any of various local area networks (LANs) including Ethernet (registered trademark), a wide area network (WAN), and the like. The network 30 may also include a dedicated line network such as an Internet protocol-virtual private network (IP-VPN). The network 30 may further include a wireless communication network such as Wi-Fi (registered trademark) and Bluetooth (registered trademark).

The configuration examples of the image capturing device 10 and the control device 20 according to the present embodiment have been described above. Note that the configurations of the image capturing device 10 and the control device 20 according to the present embodiment are not limited to the configuration examples described above with reference to Figs. 2 and 3. For example, the control device 20 according to the present embodiment does not necessarily have to include the learning unit 220. The control device 20 according to the present embodiment may control the image capturing of the observation target performed by the image capturing device 10 on the basis of learning knowledge learned by another device.

Also, the image capturing device 10 and the control device 20 according to the present embodiment may be achieved as an integrated device. The configurations of the image capturing device 10 and the control device 20 according to the present embodiment can flexibly be modified in accordance with the specifications and the operation.

### <<1.3. Details of Control>>

Next, image capturing control by means of the control device 20 according to the present embodiment will be described in detail. Note that, in the following description, a case where an observation target according to the present embodiment is a fertile ovum is raised as a main example.

(Image Capturing Control Based on Center-of-Gravity Position of Observation Target)

First, image capturing control based on a center-of-gravity position of the observation target by means of the control device 20 according to the present embodiment will be described. As described above, the control device 20 according to the present embodiment can control the image capturing device 10 so that, on the basis of a center-of-gravity position of the observation target detected with use of a pre-trained model generated on the basis of a machine learning algorithm, the center-of-gravity position may be substantially at a center of an image capturing range for the image capturing device 10.

Also, the control device 20 according to the present embodiment can calculate an enlargement magnification for use in newly causing the image capturing device 10 to perform image capturing on the basis of the detected center-of-gravity position or the like of the observation target.

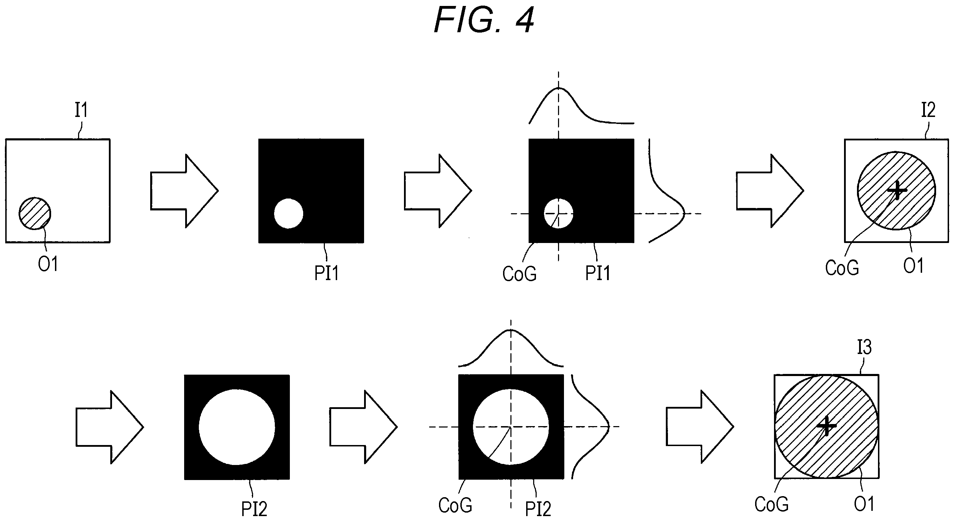

Fig. 4 is a diagram for describing image capturing control based on a center-of-gravity position of the observation target according to the present embodiment. Fig. 4 schematically illustrates a flow of detection of a center-of-gravity position and image capturing control based on the center-of-gravity position by means of the control device 20 according to the present embodiment.

First, as illustrated on the upper left in the figure, the image capturing control unit 210 according to the present embodiment causes the image capturing device 10 to capture an image I1 obtained by capturing an image of an entire well containing an observation target O1 with use of the optical objective lens 115 having a low magnification.

Subsequently, the processing unit 230 according to the present embodiment sets the image I1 captured as described above as an input and outputs a probability distribution of a recognition result of the observation target O1 with use of the pre-trained model generated on the basis of the machine learning algorithm. At this time, the processing unit 230 according to the present embodiment may output a recognition probability image PI1 that visualizes the above-described probability distribution.

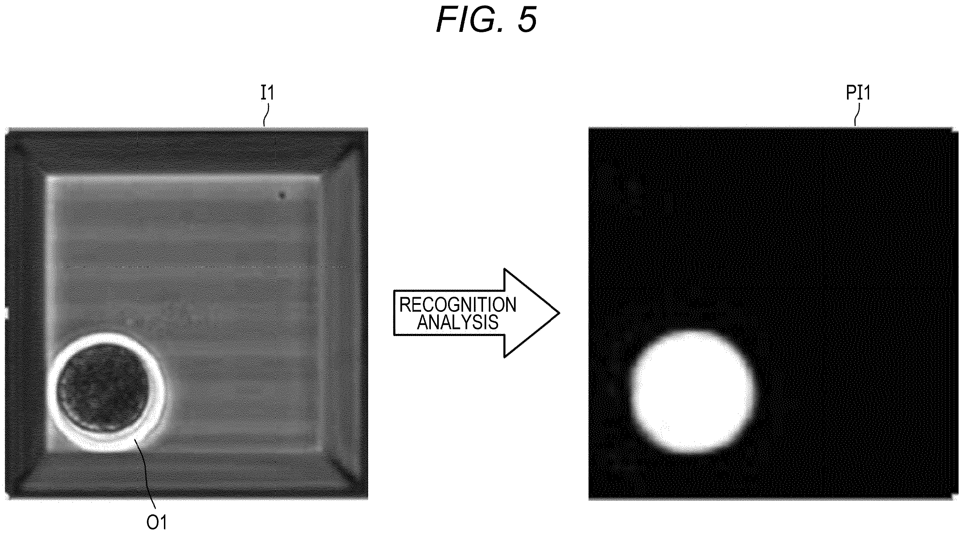

Fig. 5 is a diagram illustrating an example of the recognition probability image according to the present embodiment. The processing unit 230 according to the present embodiment performs a recognition analysis to the image I1 as illustrated on the upper left in the figure obtained by capturing the image of the entire well containing the observation target O1 to enable the recognition probability image PI1 as illustrated on the right in the figure to be output.

The recognition probability image according to the present embodiment visualizes the probability that an object (pixel) in the image is the observation target O1 and indicates that the whiter object (pixel) has a higher probability of being the observation target O1 and that the blacker object (pixel) has a lower probability of being the observation target O1. Referring to Fig. 5, it is apparent that a part corresponding to a region in which the observation target O1 exists in the image I1 on the left in the figure is expressed by a whiter color in the recognition probability image PI1 on the right in the figure.

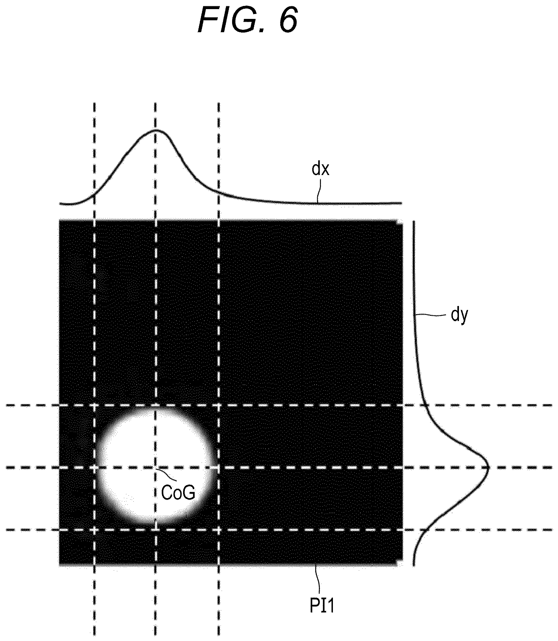

Subsequently, the image capturing control unit 210 according to the present embodiment detects a center-of-gravity position of the observation target O1 on the basis of the recognition probability image PI1 output by the processing unit 230. Fig. 6 is a diagram for describing detection of the center-of-gravity position of the observation target according to the present embodiment.

In Fig. 6, probability distribution curves of the recognition result of the observation target O1 in an x direction and in a y direction on the recognition probability image PI1 are illustrated by dx and dy, respectively. At this time, as illustrated in the figure, the image capturing control unit 210 according to the present embodiment may detect a point with the highest recognition probability in each of dx and dy as a center-of-gravity position COG of the observation target O1.

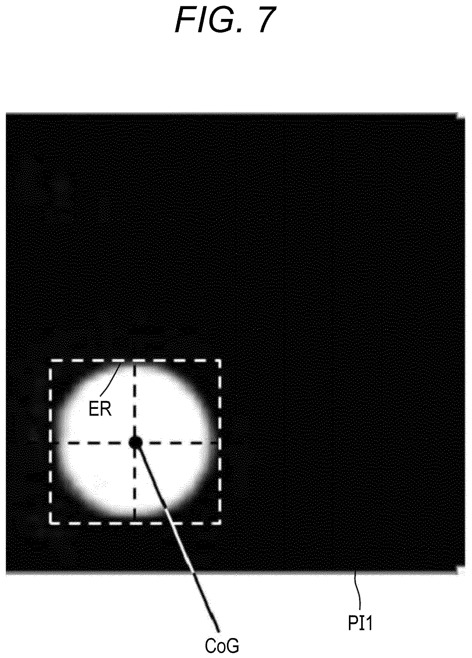

Also, the image capturing control unit 210 according to the present embodiment may calculate an enlargement magnification for use in subsequently causing the image capturing device 10 to capture an image of the observation target O1 on the basis of the recognition probability image PI1. Fig. 7 is a diagram for describing calculation of the enlargement magnification according to the present embodiment.

In Fig. 7, an enlargement target region ER determined on the basis of the probability distribution and the center-of-gravity position CoG illustrated in Fig. 6 is illustrated by a white dotted line. For example, the image capturing control unit 210 according to the present embodiment may determine, as the enlargement target region ER, a region centered on the detected center-of-gravity position CoG and having a recognition probability equal to or higher than a predetermined value.

Also, the image capturing control unit 210 according to the present embodiment can calculate the enlargement magnification for use in subsequently causing the image capturing device 10 to capture an image of the observation target O1 on the basis of the enlargement target region ER determined as described above and the image capturing range (optical field of view) of the recognition probability image PI1 (or the image I1).

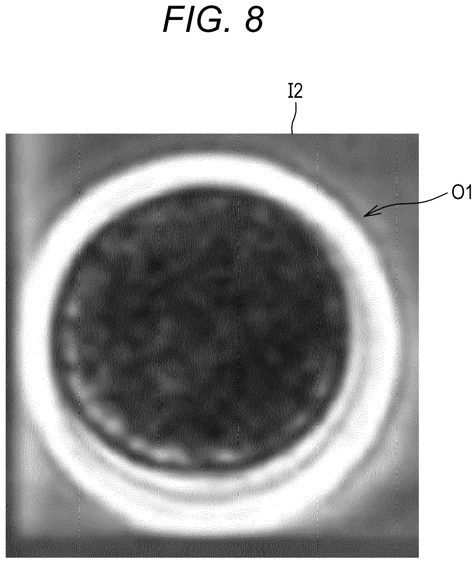

Fig. 8 illustrates an example of an image I2 that the image capturing control unit 210 causes the image capturing device 10 to newly capture on the basis of the center-of-gravity position and the enlargement magnification detected as described above. At this time, the image capturing control unit 210 according to the present embodiment controls the physical positions of the holding unit 120 and the image capturing unit 110 of the image capturing device 10 in the x direction and in the y direction and performs selection of the optical objective lens 115 and control of the enlargement magnification to enable the image I2 to be acquired.

The image capturing control based on the center-of-gravity position of the observation target according to the present embodiment has been described above. With the above-described function of the image capturing control unit 210 according to the present embodiment, it is possible to automatically adjust the horizontal position of the observation target and automatically adjust the enlargement magnification so that the image of the observation target may be captured at a larger size.

Note that the image capturing control unit 210 according to the present embodiment may repetitively determine the center-of-gravity position and the enlargement magnification as described above a plurality of times, as illustrated in Fig. 4. With the above-described repetitive control by means of the image capturing control unit 210, it is possible to capture an image in which the observation target O1 is further enlarged, as illustrated in Fig. 4.

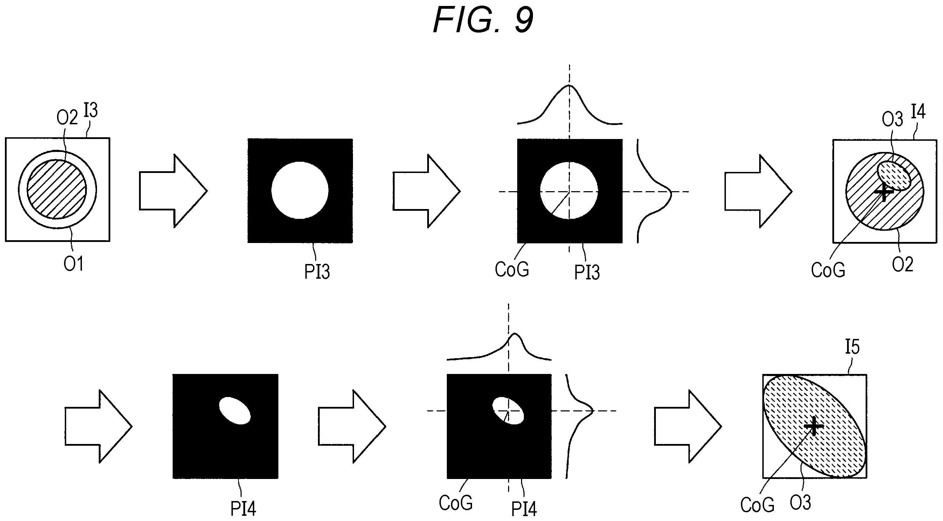

Note that, although a case where the observation target according to the present embodiment is the fertile ovum itself has been raised as an example in the above description, the observation target according to the present embodiment may be an arbitrary structure contained in a cell having division potential such as the fertile ovum or an arbitrary region in the structure, for example. Fig. 9 is a diagram for describing image capturing control based on the center-of-gravity position in a case where the observation target is a structure contained in a cell according to the present embodiment.

Fig. 9 schematically illustrates a flow of image capturing control based on the center-of-gravity position in a case where the observation target is a structure contained in a cell.

First, as described with reference to Figs. 4 to 8, the image capturing control unit 210 according to the present embodiment causes the image capturing device 10 to capture an enlarged image I3 with the entire fertile ovum as the observation target O1.

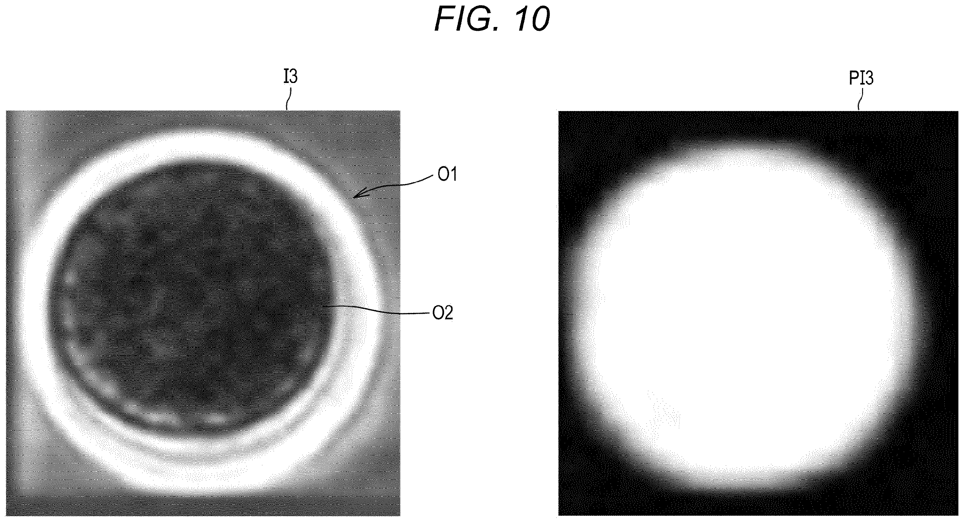

Subsequently, the processing unit 230 according to the present embodiment sets a cell mass contained in the fertile ovum as a new observation target O2 and outputs a probability distribution of a recognition result of the observation target O2 serving as the cell mass. At this time, the processing unit 230 according to the present embodiment may output a recognition probability image PI3 that visualizes the above-described probability distribution. Fig. 10 illustrates an example of the recognition probability image PI3 in a case where the cell mass in the fertile ovum is set as the observation target O2.

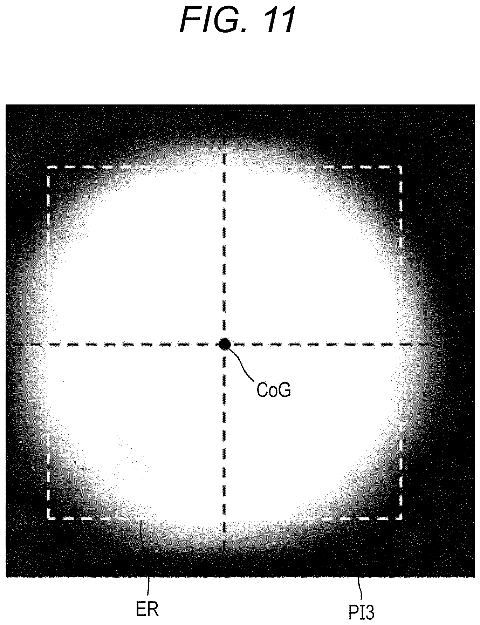

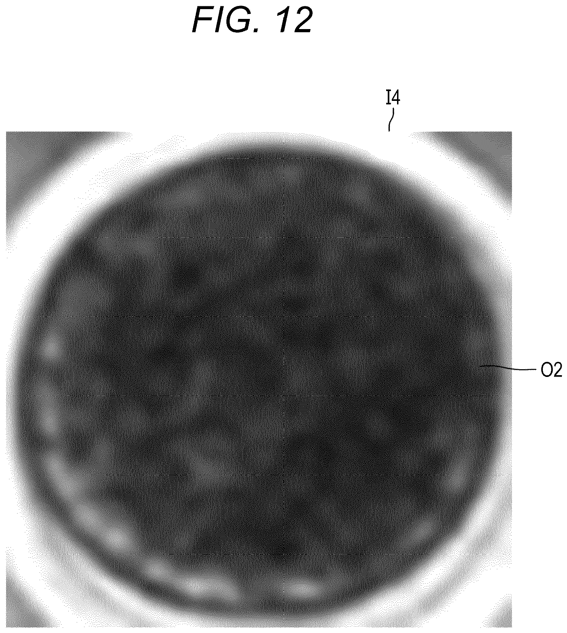

Subsequently, as illustrated in Fig. 11, the image capturing control unit 210 specifies a center-of-gravity position CoG and an enlargement region ER of the observation target O2 on the basis of the recognition probability image PI3 and also calculates an enlargement magnification. Fig. 12 illustrates an image I4 that the image capturing control unit 210 causes the image capturing device 10 to newly capture on the basis of the center-of-gravity position CoG and the enlargement magnification obtained as described above.

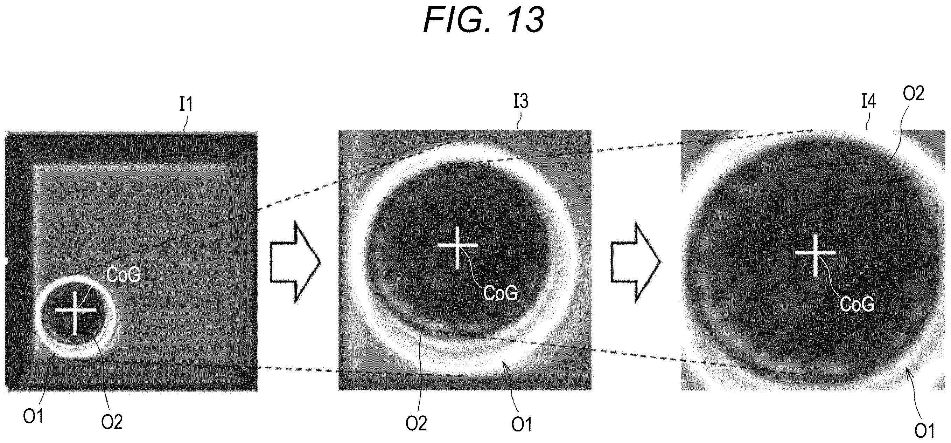

Also, Fig. 13 illustrates comparison among the image I1, the image 13, and the image I4 captured as described above. Note that, in Fig. 13, the center-of-gravity position of each observation target is illustrated by an outline cross. Here, referring to Fig. 13, it is apparent that, due to the above-described control by means of the image capturing control unit 210 according to the present embodiment, the observation target is centered and correctly enlarged in order of the entire well, the fertile ovum, and the cell mass.

The description will be continued with reference to Fig. 9 again. After causing the image I4 of the enlarged cell mass to be captured, the image capturing control unit 210 may continue the image capturing control with an arbitrary region in the cell mass as a new observation target O3, as illustrated on the upper right in the figure.

At this time, the processing unit 230 can output a recognition probability of the new observation target O3 as a recognition probability image 14, as illustrated on the lower side of the figure, and the image capturing control unit 210 can detect a center-of-gravity position CoG of the observation target O3 on the basis of the recognition probability image I4 and can also calculate an enlargement magnification. Also, the image capturing control unit 210 causes the image capturing device 10 to capture a further enlarged image I5 centered on the observation target O3, as illustrated on the lower right in the figure, on the basis of the detected center-of-gravity position CoG and the calculated enlargement magnification.

Note that the image capturing control unit 210 does not necessarily have to control image capturing in order of the fertile ovum, the cell mass, and the arbitrary region in the cell mass. For example, the image capturing control unit 210 can cause the image capturing device 10 to capture the image of the enlarged fertile ovum and then cause the image capturing device 10 to capture the arbitrary region in the cell mass without enlarging the cell mass.

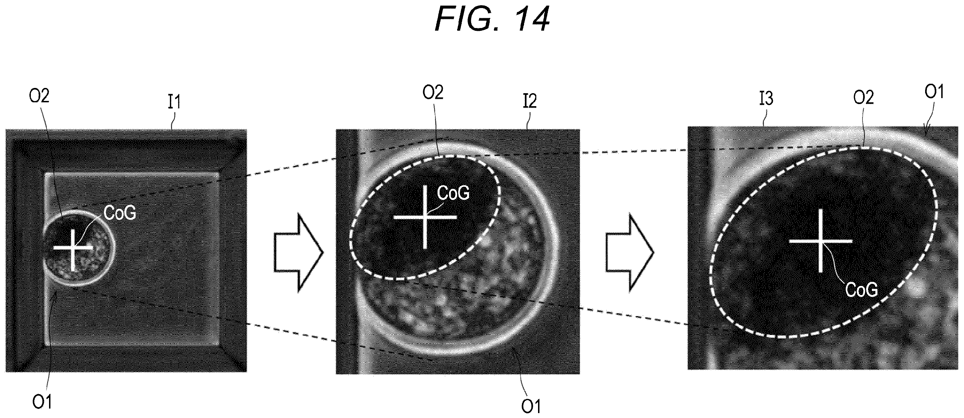

Fig. 14 illustrates, in a time series, images acquired in a case of enlarging the arbitrary region in the cell mass without enlarging the cell mass. Referring to Fig. 14, it is apparent that the image capturing control unit 210 acquires the image I2 enlarged with the entire fertile ovum as the observation target O1 on the basis of the image I1 obtained by capturing the image of the entire well and causes the image capturing device 10 to capture the image I3 enlarged with the arbitrary region in the cell mass as the observation target O2 on the basis of the image 12.

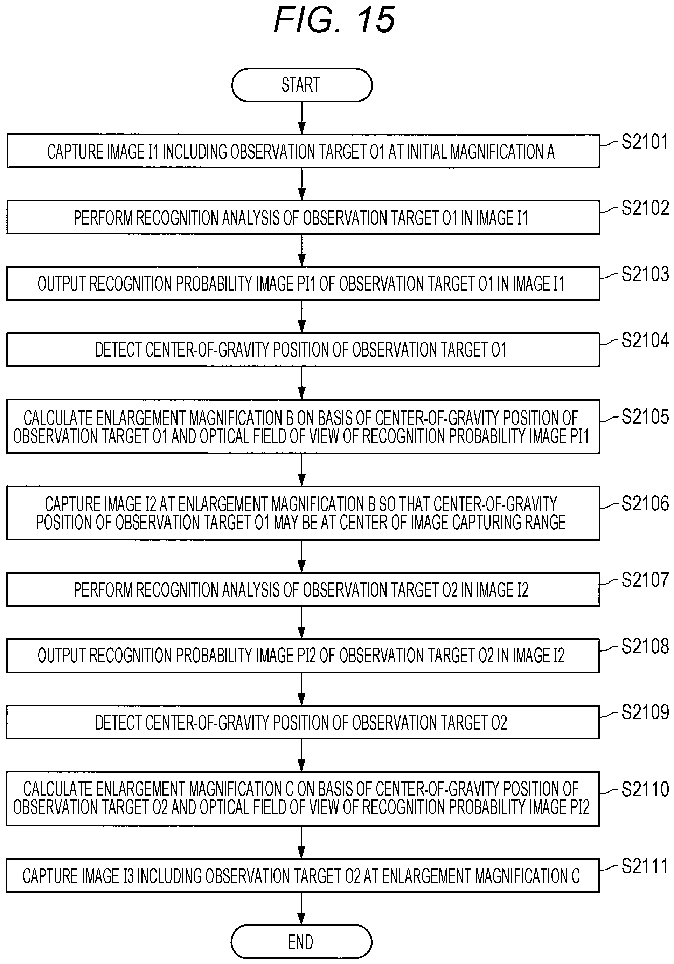

Next, a flow of image capturing control based on the center-of-gravity position of the observation target according to the present embodiment will be described in detail. Fig. 15 is a flowchart illustrating a flow of image capturing control based on the center-of-gravity position of the observation target according to the present embodiment. Note that Fig. 15 illustrates an example of a case where the image capturing control unit 210 causes the image capturing device 10 to sequentially capture the enlarged images of the observation targets O1 and O2.

The image capturing control unit 210 first causes the image capturing device 10 to capture the image I1 of the entire well containing the observation target O1 at an initial magnification A (S2101).

Subsequently, the processing unit 230 performs a recognition analysis of the observation target O1 with the image I1 captured in step S2101 as an input (S2102) and outputs the recognition probability image PI1 of the observation target O1 in the image I1 (S2103).

Subsequently, the image capturing control unit 210 detects a center-of-gravity position of the observation target O1 on the basis of the recognition probability image PI1 output in step S2103 (S2104).

Also, the image capturing control unit 210 calculates an enlargement magnification B on the basis of the center-of-gravity position detected in step S2104 and the optical field of view of the recognition probability image PI1 (S2105).

Subsequently, the image capturing control unit 210 causes the image capturing device 10 to capture the image I2 at the enlargement magnification B so that the center-of-gravity position detected in step S2104 may be substantially at a center of the image capturing range (S2106) .

Subsequently, the processing unit 230 performs a recognition analysis of the observation target O2 with the image I2 captured in step S2106 as an input (S2107) and outputs the recognition probability image PI2 of the observation target O2 in the image I2 (S2108).

Subsequently, the image capturing control unit 210 detects a center-of-gravity position of the observation target O2 on the basis of the recognition probability image PI2 output in step S2108 (S2109).

Also, the image capturing control unit 210 calculates an enlargement magnification C on the basis of the center-of-gravity position detected in step S2109 and the optical field of view of the recognition probability image PI2 (S2110).

Subsequently, the image capturing control unit 210 causes the image capturing device 10 to capture the image I3 at the enlargement magnification C so that the center-of-gravity position detected in step S2110 may be substantially at a center of the image capturing range (S2106) .

The image capturing control based on the center-of-gravity position of the observation target according to the present embodiment has been described above. Note that, although the detection of the center-of-gravity position of the observation target and the calculation of the enlargement magnification have been described above as the functions of the image capturing control unit 210, the above processing may be executed by the processing unit 230.

### (Control of Focal Position)

Next, control of a focal position in image capturing of an observation target according to the present embodiment will be described in detail. As described above, the control device 20 according to the present embodiment can control a focal position related to image capturing of an observation target on the basis of a form probability of the observation target calculated with use of a pre-trained model generated on the basis of a machine learning algorithm.

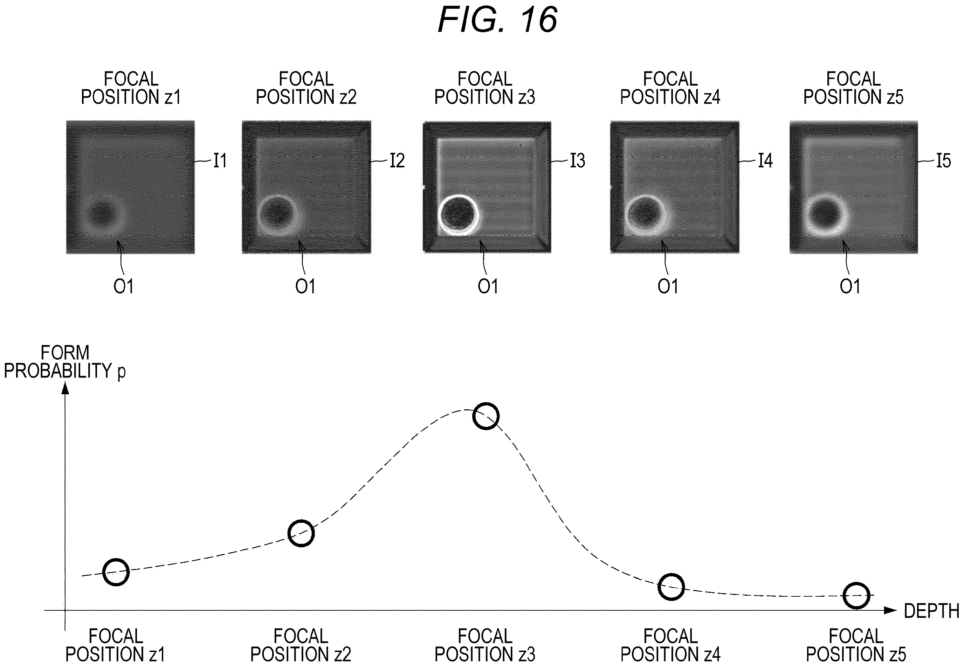

Fig. 16 is a diagram for describing control of the focal position according to the present embodiment. The image capturing control unit 210 according to the present embodiment causes the image capturing device 10 to capture a plurality of images including the observation target at a plurality of different focal positions.

On the upper side of Fig. 16, a plurality of images I1 to I5 captured at different focal positions z1 to z5 under the above-described control by means of the image capturing control unit 210 is illustrated.

Subsequently, the processing unit 230 according to the present embodiment performs a form analysis for each of the images I to I5 captured as described above and outputs form probabilities P1 to P5 of the observation target in the images, respectively. Here, the above-described form probability P may be a value indicating a probability that the object detected in the image is a predetermined observation target. Examples of the observation target include a blastomere, a fragment, a pronucleus, a polar body, a zona pellucida, an inner cell mass (ICM), a trophectoderm (TE), two cells, four cells, a morula, a blastocyst of a fertile ovum cell, and the like. The processing unit 230 according to the present embodiment can output the form probability P on the basis of learning knowledge that the learning unit 220 has learned by associating training data with an image of an observation target.

On the lower side of Fig. 16, a probability distribution is illustrated in which the form probabilities P calculated as described above are plotted to be associated with the focal positions z1 to z5 at the time of image acquisition.

In the example illustrated in Fig. 16, the form probability P3 of the image I3 captured at the focal position z3 is derived as a highest value. This means that the recognition probability of the observation target O1 is highest in a case where an image of the observation target O1 is captured at the focal position z3.

Therefore, the image capturing control unit 210 according to the present embodiment may cause the image capturing device 10 to capture an image of the observation target O1 at a focal position for an image whose form probability calculated is highest among those of a plurality of images captured by the image capturing device 10 at different focal positions. At this time, the image capturing control unit 210 according to the present embodiment may control physical positions of the holding unit 120 and the image capturing unit 110 in the z direction and a focal length of the optical objective lens 115.

With the above-described function of the image capturing control unit 210 according to the present embodiment, even in a case where a focal position appropriate to image capturing of an observation target such as a fertile ovum dynamically changes due to division or the like, an image of the observation target can be captured at an appropriate focal position at all times in accordance with the change.

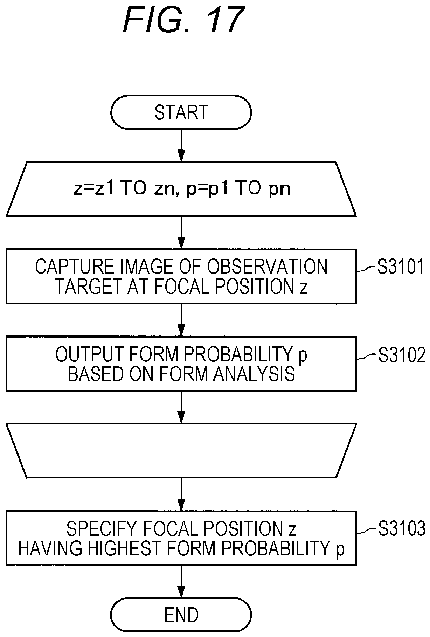

Fig. 17 is a flowchart illustrating a flow of specifying a focal length appropriate to image capturing of an observation target according to the present embodiment. Referring to Fig. 17, the image capturing control unit 210 first causes the image capturing device 10 to capture an image of the observation target at a certain focal position z (S3101).

Subsequently, the processing unit 230 performs a form analysis of the image captured at the certain focal position z in step S3101 to output a form probability P of the observation target in the image (S3102).

The control device 20 repetitively executes the above-described processing in steps S3101 and S3102 with the focal positions z = z1 to zn and the form probabilities p = p1 to pn.

Subsequently, the image capturing control unit 210 specifies the focal position z obtained when the image having the highest form probability p among the output form probabilities p1 to pn is captured (S3103).

The control of the focal position in the image capturing of the observation target according to the present embodiment has been described. Note that, although a case where the control device 20 according to the present embodiment specifies the focal position and the center-of-gravity position of the observation target on the basis of a recognition ability obtained by supervised learning has been raised as a main example, the control device 20 according to the embodiment may control the above-described image capturing of the observation target on the basis of a control ability obtained by reinforcement learning.

The learning unit 220 according to the present embodiment can perform learning related to the image capturing control of the observation target on the basis of a reward designed in accordance with the clarity of the image of the observation target captured, the ratio of the captured region to the entire structure, and the like, for example.

### (Background Removal Based on Difference Feature Amount)

Next, a background removal function according to the present embodiment will be described in detail. As described above, the control device 20 according to the present embodiment can achieve background removal on the basis of a difference feature amount, which is a difference between a feature amount extracted from an image of a well containing the observation target and a feature amount extracted from an image of an empty well not containing the observation target.

In general, a well provided in a culture dish may have a pattern depending on the manufacturing method. For example, some culture dishes have mortar-shaped wells for securing the observation target at the center of each of the wells. The above-described mortar-shaped well is formed by a machine tool such as a drill, for example.

However, in a case where the well is formed with use of a drill or the like, cutting causes a concentric pattern (scratch) to be generated on the well. The pattern generated in such a process of forming the well produces various kinds of shade by reflecting light emitted from the irradiating unit 130 and has a great influence on observation of the observation target. In particular, the above-described concentric pattern is difficult to distinguish from the outer shape of a fertile ovum or the like, which may be a factor that lowers recognition accuracy and evaluation accuracy for the fertile ovum.

For this reason, in observing an observation target containing a fertile ovum or the like, it is desirable to perform recognition, evaluation, and the like after removing the pattern on the well, that is, the background.

At this time, for example, a method of capturing an image of a well containing an observation target and an image of the well not containing the observation target and deriving a difference between the two images is also assumed. However, here, in a case where the difference is derived at a pixel level, it is assumed that a difference image appropriate to recognition cannot be acquired.

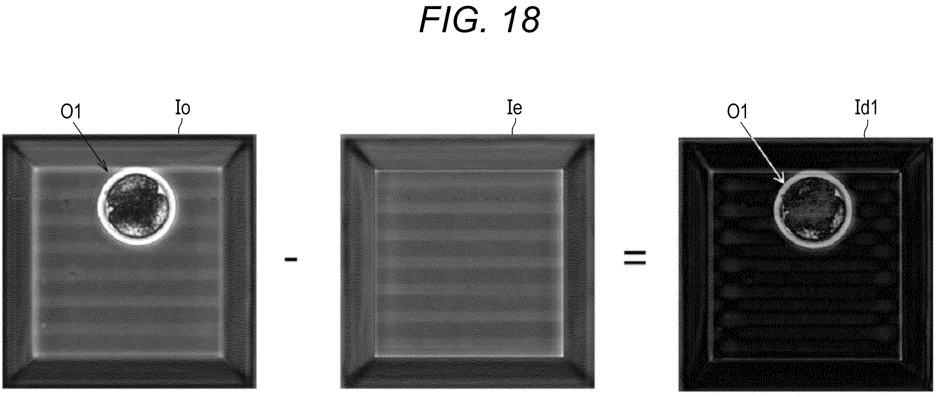

Fig. 18 is a diagram for describing a difference image generated at a pixel level. A captured image Io of a well containing the observation target O1 is illustrated on the left side of the figure, a captured image Ie of an empty well not containing the observation target O1 is illustrated at the center of the figure, and a difference image Id1 generated by subtracting the image Ie from the image Io at the pixel level is illustrated on the right side of the figure.

Here, as attention is focused on the generated difference image Id1, it is apparent that the pattern on the well, that is, an influence of the background is not completely eliminated by subtraction at the pixel level. Also, at least a part of an observation target such as a fertile ovum is often semi-transparent, and the pattern on the well is reflected in the semi-transparent part. However, in the subtraction at the pixel level, the reflection may be emphasized, which may cause the recognition accuracy for the observation target to be significantly lowered.

Under such circumstances, the processing unit 230 according to the present embodiment has a characteristic of calculating a feature amount of an image of an observation target captured and removing a background on the basis of the feature amount with use of a pre-trained model generated on the basis of a machine learning algorithm to eliminate an influence of a pattern on a well.

Specifically, the processing unit 230 according to the present embodiment can achieve the background removal on the basis of a difference feature amount, which is a difference between a feature amount extracted from an image of a well containing the observation target and a feature amount extracted from an image of an empty well not containing the observation target.

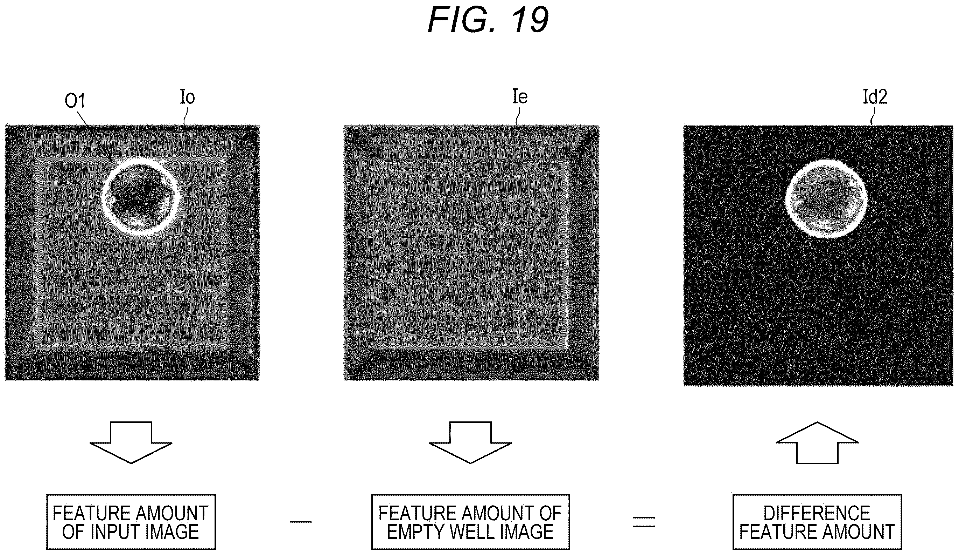

Fig. 19 is a diagram for describing background removal based on a difference feature amount according to the present embodiment. The captured image Io of the well containing the observation target O1 is illustrated on the left side of the figure, the captured image Ie of the empty well not containing the observation target O1 is illustrated at the center of the figure, and a difference image Id2 generated on the basis of the above-described difference feature amount is illustrated on the right side of the figure.

The processing unit 230 according to the present embodiment first extracts a feature amount of the captured image Io of the well containing the observation target O1 on the basis of learning knowledge related to recognition of the observation target O1 by means of the learning unit 220.

Subsequently, the processing unit 230 according to the present embodiment extracts a feature amount of the captured image Ie of the empty well.

Subsequently, the processing unit 230 according to the present embodiment calculates a difference feature amount by subtracting the feature amount of the captured image Ie of the empty well from the feature amount of the captured image Io of the well containing the observation target O1 and executes background removal processing on the basis of the difference feature amount.

Referring to Fig. 19, it is apparent that, in the difference image Id2 generated in the above processing by means of the processing unit 230 according to the present embodiment, the pattern on well on the background is almost completely eliminated, and an influence of the pattern on the well is eliminated from the semi-transparent part of the observation target O1.

In this manner, with the background removal based on the difference feature amount according to the present embodiment, the influence of the pattern on the well can be eliminated with a high degree of accuracy, and the recognition accuracy and the evaluation accuracy for the observation target can significantly be improved.

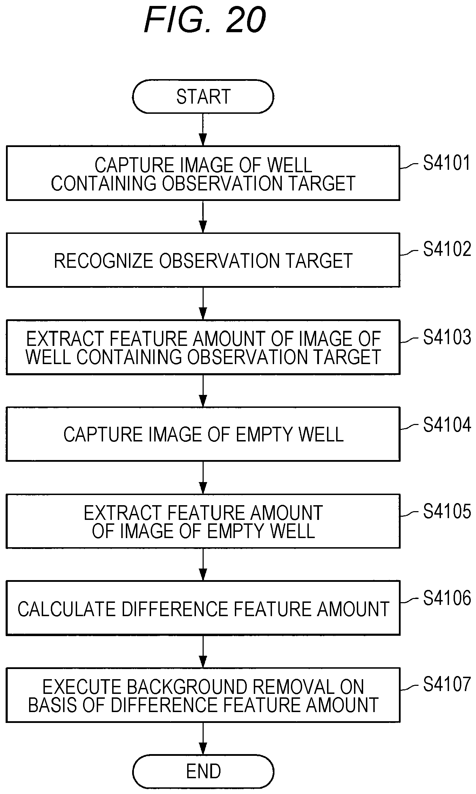

Next, a flow of the background removal based on the difference feature amount according to the present embodiment will be described in detail. Fig. 20 is a flowchart illustrating a flow of the background removal based on the difference feature amount according to the present embodiment.

Referring to Fig. 20, the image capturing control unit 210 first causes the image capturing device 10 to capture an image of a well containing an observation target (S4101).

Subsequently, the processing unit 230 recognizes the observation target from the image captured in step S4101 (S4102) and extracts a feature amount of the image of the well containing the observation target (S4103).

Subsequently, the image capturing control unit 210 causes the image capturing device 10 to capture an image of an empty well not containing the observation target (S4104) .

Subsequently, the processing unit 230 extracts a feature amount of the image of the empty well captured in step 4103 (S4105).

Subsequently, the processing unit 230 subtracts the feature amount of the image of the empty well extracted in step S4105 from the feature amount of the image of the well containing the observation target extracted in step S4103 to calculate a difference feature amount (S4106).

Subsequently, the processing unit 230 executes background removal on the basis of the difference feature amount calculated in step S4106 (S4107).

The background removal based on the difference feature amount according to the present embodiment has been described above. Note that the background removal based on the difference feature amount according to the present embodiment does not necessarily have to be performed together with the above-described image capturing control. The background removal based on the difference feature amount according to the present embodiment exerts a broad effect in capturing an image of an object having a semi-transparent part.

### <2. Hardware Configuration Example>

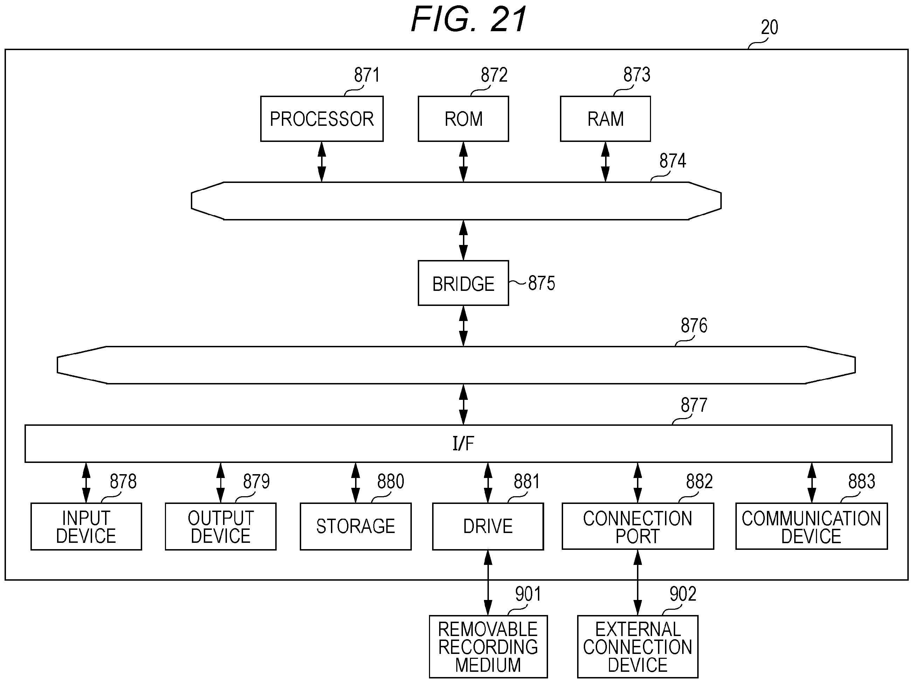

Next, a hardware configuration example of the control device 20 according to an embodiment of the present disclosure will be described. Fig. 21 is a block diagram illustrating a hardware configuration example of the control device 20 according to an embodiment of the present disclosure. Referring to Fig. 21, the control device 20 includes a processor 871, a ROM 872, a RAM 873, a host bus 874, a bridge 875, an external bus 876, an interface 877, an input device 878, an output device 879, a storage 880, a drive 881, a connection port 882, and a communication device 883, for example. Note that the hardware configuration illustrated here is illustrative, and some of the components may be omitted. Also, components other than the components illustrated here may be included.

### (Processor 871)

The processor 871 functions as an arithmetic processing device or a control device, for example, and controls the operation of each component in whole or in part on the basis of various programs recorded in the ROM 872, the RAM 873, the storage 880, or a removable recording medium 901.

### (ROM 872 and RAM 873)

The ROM 872 is a means for storing a program read by the processor 871, data used for calculation, and the like. The RAM 873 temporarily or permanently stores a program read by the processor 871, various parameters that appropriately change when the program is executed, and the like, for example.

### (Host Bus 874, Bridge 875, External Bus 876, and Interface 877)

The processor 871, the ROM872, and the RAM873 are connected to each other via the host bus 874 enabling high-speed data transmission, for example. On the other hand, the host bus 874 is connected to the external bus 876 having a relatively low data transmission rate via the bridge 875, for example. Also, the external bus 876 is connected to various components via the interface 877.

### (Input Device 878)

As the input device 878, a mouse, a keyboard, a touch panel, a button, a switch, a lever, or the like is used, for example. Also, as the input device 878, a remote control (hereinafter, a remote control) enabling a control signal to be transmitted with use of infrared rays or other radio waves may be used. Further, the input device 878 includes a voice input device such as a microphone.

### (Output Device 879)

The output device 879 is a unit enabling information acquired to visually or audibly provide to a user, such as a display unit such as a cathode ray tube (CRT), an LCD, and an organic EL, an audio output device such as a loudspeaker and headphones, a printer, a mobile phone, and a facsimile, for example. Also, the output device 879 according to the present disclosure also includes various vibrating devices enabling tactile stimuli to be output.

### (Storage 880)

The storage 880 is a unit for storing various data. As the storage 880, a magnetic storage device such as a hard disk drive (HDD), a semiconductor storage device, an optical storage device, a magneto-optical storage device, or the like is used, for example.

### (Drive 881)

The drive 881 is a unit for reading information recorded on the removable recording medium 901 such as a magnetic disk, an optical disk, a magneto-optical disk, and a semiconductor memory or writing information on the removable recording medium 901, for example.

### (Removable Recording Medium 901)

The removable recording medium 901 is a DVD medium, a Blu-ray (registered trademark) medium, an HD DVD medium, any of various semiconductor storage media, or the like, for example. Of course, the removable recording medium 901 may be an IC card equipped with a non-contact type IC chip, an electronic device, or the like, for example.

### (Connection Port 882)

The connection port 882 is a port for connecting an external connection device 902 such as a universal serial bus (USB) port, an IEEE1394 port, a small computer system interface (SCSI), an RS-232C port, and an optical audio terminal, for example.

### (External Connection Device 902)

The external connection device 902 is a printer, a portable music player, a digital camera, a digital video camera, an IC recorder, or the like, for example.

### (Communication Device 883)

The communication device 883 is a communication device for connection to a network, such as a communication card for a wired or wireless LAN, Bluetooth (registered trademark), or a wireless USB (WUSB), a router for optical communication, a router for an asymmetric digital subscriber line (ADSL), and a modem for various kinds of communication, for example.

### <3. Wrap-up>

As described above, the control device 20 that achieves a control method according to an embodiment of the present disclosure includes the image capturing control unit 210 that controls time-series image capturing of an observation target. Also, the image capturing control unit 210 according to an embodiment of the present disclosure has a characteristic of controlling at least one of a relative horizontal position or a relative focal position between the image capturing unit 110 that performs image capturing and the observation target on the basis of a recognition result of the observation target calculated with use of a pre-trained model generated on the basis of a machine learning algorithm. Also, the observation target according to an embodiment of the present disclosure includes a cell having division potential. With this configuration, in capturing an image of the observation target in a time series, the image of the observation target can be captured with a high degree of accuracy.

Although the preferred embodiments of the present disclosure have been described above in detail with reference to the accompanying drawings, the technical scope of the present disclosure is not limited to such examples. It is obvious that a person having ordinary knowledge in the technical field of the present disclosure can arrive at various change examples or modification examples within the scope of the technical idea described in the claims, and it is apparently understood that these examples also belong to the technical scope of the present disclosure.

Also, the effects described in the present description are merely explanatory or illustrative and are not limitative. That is, the technique according to the present disclosure may exert other effects that are apparent to those skilled in the art from the present description, in addition to or instead of the above effects.

Also, it is possible to prepare a program for causing hardware such as a CPU, a ROM, and a RAM built in a computer to exhibit a similar function to that of a configuration of the control device 20 and to provide a computer-readable recording medium having recorded therein the program.

Also, the respective steps related to the processing of the control device 20 in the present description do not necessarily have to be processed in a time series in the order described in the flowchart. For example, the respective steps related to the processing of the control device 20 may be processed in different order from the order described in the flowchart or may be processed in parallel.

Note that the following configurations also belong to the technical scope of the present disclosure.
(1) A control device including:
   an image capturing control unit that controls image capturing of an observation target including a cell having division potential in a time series,
   in which the image capturing control unit controls at least one of a relative horizontal position or a relative focal position between an image capturing unit that performs the image capturing and the observation target on the basis of a recognition result of the observation target calculated with use of a pre-trained model generated on the basis of a machine learning algorithm.
(2) The control device according to the above (1),
   in which the cell having division potential includes a fertile ovum.
(3) The control device according to the above (1) or (2) ,
   in which the image capturing control unit detects a center-of-gravity position of the observation target on the basis of a recognition probability of the observation target calculated with use of the pre-trained model and takes control in order for the center-of-gravity position to be substantially at a center of an image capturing range for the image capturing unit.
(4) The control device according to the above (3),
   in which the image capturing control unit detects the center-of-gravity position on the basis of a recognition probability image of the observation target generated with use of the pre-trained model.
(5) The control device according to the above (4),
   in which the image capturing control unit causes the image capturing unit to capture an image of the observation target at an enlargement magnification calculated on the basis of the center-of-gravity position and the recognition probability detected.
(6) The control device according to any one of the above (1) to (5),
   in which the image capturing control unit controls the focal position on the basis of a form probability of the observation target calculated with use of the pre-trained model.
(7) The control device according to the above (6),
   in which the image capturing control unit causes the image capturing unit to capture an image of the observation target at the focal position of an image whose form probability calculated is highest among those of a plurality of images captured by the image capturing unit at the different focal positions.
(8) The control device according to any one of the above (1) to (7), further including:
   a processing unit that calculates a recognition probability of the observation target in a captured image with use of the pre-trained model.
(9) The control device according to the above (8),
   in which the processing unit calculates a feature amount of an image of the observation target captured and removes a background on the basis of the feature amount with use of the pre-trained model.
(10) The control device according to the above (9),
   in which the processing unit removes the background in the image of the observation target captured on the basis of a difference feature amount, which is a difference between the feature amount of the image of the observation target captured and a feature amount of an image of an empty well not containing the observation target captured.
(11) The control device according to any one of the above (1) to (10),
   in which the observation target includes an arbitrary structure contained in the cell having division potential or an arbitrary region in the structure.
(12) The control device according to any one of the above (1) to (11), further including:
   a learning unit that performs learning related to recognition of the observation target on the basis of the image of the observation target captured and the machine learning algorithm.
(13) The control device according to any one of the above (1) to (11),
   in which the pre-trained model is a recognizer generated with use of learning data including the image of the observation target captured and information regarding a feature related to at least one of a shape, a form, or a structure of the observation target.
(14) A control method including:
   a processor's control of image capturing of an observation target including a cell having division potential in a time series,
   in which the control of image capturing further includes control of at least one of a relative horizontal position or a relative focal position between an image capturing unit that performs the image capturing and the observation target on the basis of a recognition probability of the observation target calculated with use of a pre-trained model generated on the basis of a machine learning algorithm, and
   the observation target includes a cell having division potential.
(15) A program causing a computer to function as
   a control device including:
   an image capturing control unit that controls image capturing of an observation target including a cell having division potential in a time series,
   in which the image capturing control unit controls at least one of a relative horizontal position or a relative focal position between an image capturing unit that performs the image capturing and the observation target on the basis of a recognition probability of the observation target calculated with use of a pre-trained model generated on the basis of a machine learning algorithm.

### REFERENCE SIGNS LIST

- 10: Image capturing device
- 110: Image capturing unit
- 120: Holding unit
- 130: Irradiating unit
- 20: Control device

- 210: Image capturing control unit
- 220: Learning unit
- 230: Processing unit

## Claims

1. A control device comprising:
an image capturing control unit that controls image capturing of an observation target including a cell having division potential in a time series,
wherein the image capturing control unit controls at least one of a relative horizontal position or a relative focal position between an image capturing unit that performs the image capturing and the observation target on a basis of a recognition result of the observation target calculated with use of a pre-trained model generated on a basis of a machine learning algorithm.

2. The control device according to claim 1,
wherein the cell having division potential includes a fertile ovum.

3. The control device according to claim 1,
wherein the image capturing control unit detects a center-of-gravity position of the observation target on a basis of a recognition probability of the observation target calculated with use of the pre-trained model and takes control in order for the center-of-gravity position to be substantially at a center of an image capturing range for the image capturing unit.

4. The control device according to claim 3,
wherein the image capturing control unit detects the center-of-gravity position on a basis of a recognition probability image of the observation target generated with use of the pre-trained model.

5. The control device according to claim 4,
wherein the image capturing control unit causes the image capturing unit to capture an image of the observation target at an enlargement magnification calculated on a basis of the center-of-gravity position and the recognition probability detected.

6. The control device according to claim 1,
wherein the image capturing control unit controls the focal position on a basis of a form probability of the observation target calculated with use of the pre-trained model.

7. The control device according to claim 6,
wherein the image capturing control unit causes the image capturing unit to capture an image of the observation target at the focal position of an image whose form probability calculated is highest among those of a plurality of images captured by the image capturing unit at the different focal positions.

8. The control device according to claim 1, further comprising:
a processing unit that calculates a recognition probability of the observation target in a captured image with use of the pre-trained model.

9. The control device according to claim 8,
wherein the processing unit calculates a feature amount of an image of the observation target captured and removes a background on a basis of the feature amount with use of the pre-trained model.

10. The control device according to claim 9,
wherein the processing unit removes the background in the image of the observation target captured on a basis of a difference feature amount, which is a difference between the feature amount of the image of the observation target captured and a feature amount of an image of an empty well not containing the observation target captured.

11. The control device according to claim 1,
wherein the observation target includes an arbitrary structure contained in the cell having division potential or an arbitrary region in the structure.

12. The control device according to claim 1, further comprising:
a learning unit that performs learning related to recognition of the observation target on a basis of the image of the observation target captured and the machine learning algorithm.

13. The control device according to claim 1,
wherein the pre-trained model is a recognizer generated with use of learning data including the image of the observation target captured and information regarding a feature related to at least one of a shape, a form, or a structure of the observation target.

14. A control method comprising:
a processor's control of image capturing of an observation target including a cell having division potential in a time series,
wherein the control of image capturing further includes control of at least one of a relative horizontal position or a relative focal position between an image capturing unit that performs the image capturing and the observation target on a basis of a recognition probability of the observation target calculated with use of a pre-trained model generated on a basis of a machine learning algorithm.

15. A program causing a computer to function as
a control device comprising:
an image capturing control unit that controls image capturing of an observation target including a cell having division potential in a time series,
wherein the image capturing control unit controls at least one of a relative horizontal position or a relative focal position between an image capturing unit that performs the image capturing and the observation target on a basis of a recognition probability of the observation target calculated with use of a pre-trained model generated on a basis of a machine learning algorithm.
